# EUROPÄISCHE PATENTSCHRIFT

(11) **EP 3 009 821 B1**
(45) Veröffentlichungstag und Bekanntmachung des Hinweises auf die Patenterteilung: **28.06.2017**
(21) Anmeldenummer: 15182443.0
(22) Anmeldetag: 26.08.2015
(51) Int. Cl.: G01L 19/06

(54) **DRUCKSENSOR MIT EINER SENSORMEMBRAN**
PRESSURE SENSOR WITH A SENSOR MEMBRANE
CAPTEUR DE PRESSION DOTE D'UNE MEMBRANE DE CAPTEUR

(30) Priorität: 14.10.2014 AT 507312014
(43) Veröffentlichungstag der Anmeldung: 20.04.2016
(73) Patentinhaber: Piezocryst Advanced Sensorics GmbH, 8020 Graz (AT)
(72) Erfinder: BALAZS, Piri, 8010 GRAZ (AT); STRMSEK, Robert, 2327 RACE (SI); BAUMGARTNER, Martin, 8522 GROSS ST. FLORIAN (AT); KRÖGER, Dietmar, 8010 GRAZ (AT)
(74) Vertreter: Babeluk, Michael

(56) Entgegenhaltungen:
- EP-A2- 1 619 488
- WO-A1-2011/147829
- DE-A1-102007 010 589

## Beschreibung

Die Erfindung betrifft einen Drucksensor mit einer Sensormembran im Frontbereich, wobei der Sensor druckseitig einen zylindrischen Kragen aufweist, an welchem ein Thermoschutzelement lösbar befestigt ist, sowie ein Sensorsystem mit einem Drucksensor samt Thermoschutzelement und Demontageelement für das Thermoschutzelement.

Sensoren für die Druckmessung in heißen Prozessgasen, beispielsweise eingesetzt in eine Messbohrung im Brennraum einer Brennkraftmaschine, sind extremen Wärmeströmen und Druckpulsen ausgesetzt. Diese Wärmeströme führen zu sehr hohen Temperaturen im Sensor, die zu einer Verschlechterung der Messeigenschaften bzw. zur Zerstörung der frontseitigen Membran des Sensors führen können. Es sind daher bereits Maßnahmen bekannt geworden, die sensible Frontpartie des Sensors, insbesondere die Sensormembran, zu schützen, wobei jedoch durch die Schutzeinrichtung das Messverhalten des Sensors möglichst ungestört bleiben soll.

Der Membranschutz vor der Membran eines Sensors dient dazu, den Wärmeeintrag durch Wärmestrahlung und Konvektion in den Sensor zu reduzieren. Bei Ottomotoren soll durch den Thermoschutz die Flammenfront in der Schutzeinrichung zum Erlöschen gebracht werden, um Reaktionen des Sensors auf die Verbrennung zu reduzieren. Der Schutz soll auch bei Glühzündung und klopfender Verbrennung sichergestellt sein, um auch bei diesen extremen Betriebsbedingungen eine Zerstörung des Sensors durch den besonders hohen Wärmeeintrag zu verhindern.

Aus der EP 2 440 900 B1 bzw. der WO 2011/147829 A1 ist ein Thermoschutzelement bekannt, das lösbar im Frontbereich eines Drucksensors befestigt werden kann und im Bereich der Sensormembran schmale, parallel verlaufende Lamellen aufweist, die ca. 40% bis 60% der Membranfläche abdecken. Damit kann auch bei extremen Betriebsverhältnissen ein wirksames Erlöschen der Flammenfront erreicht werden. Am äußeren Umfang des Thermoschutzelements sind Haltemittel angeordnet, die federnd am inneren Umfang eines Membrantopfs des Drucksensors anliegen. Die Haltemittel können reibschlüssig anliegen oder auch in eine Nut am inneren Umfang des Membrantopfes einrasten.

In der EP 2 024 710 B1 wird ein Membranschutz für einen in eine Bohrung eines Einbauteils einschraubbaren, mit einer Membran im Frontbereich versehenen Drucksensor beschrieben, der ein Klipssystem zum inwendigen Befestigen im Frontbereich des Sensors aufweist. Ein Sensor mit einem derartigen Membranschutz kann einfach in einer Messbohrung eines Einbauteils montiert werden, wenn der Außenradius des Membranschutzes nicht größer ist als der Außenradius des Sensors. Der Membranschutz weist eine Vielzahl von kleinen Durchgangsbohrungen auf, um einen ausreichenden Kontakt mit dem zu messenden Medium herzustellen und ist mit hakenförmigen Federelementen ausgestattet, die in eine innenliegende Nut im Endbereich des Sensors eingreifen. Im Messbetrieb kommt es durch die heißen Prozessgase - und bedingt durch den raschen Gaswechsel - zu einer hohen Erhitzung und Verschmutzung der innenliegenden Federelemente, wodurch diese beschädigt werden und brechen können.

Die Befestigung einer topfförmigen Schutzkappe am frontseitigen Ende eines Drucksensors mit Hilfe einer Spiralfeder, die in einer äußeren Ringnut des Sensors angeordnet ist, ist aus der US 5,948,983 A bekannt.

Aus der DE 10 2007 010 589 A1 ist ein Druckmessumformer bekannt, der aus einer Sensoraufnahme und einer Flanschaufnahme besteht, wobei letztere endseitig eine Trennmembran aufweist, die ein Druckübertragungsmittel in einem Kanal des Messumformers vom zu messenden Prozessmedium trennt. Als Transportschutz ist die Trennmembran durch eine an einem Außengewinde des Messumformers aufschraubbare Staubschutzkappe abgedeckt.

Aus der EP 1 619 488 A2 ist eine Druckmesseinrichtung bekannt, die einen Druckstutzen mit einer zu einem Drucksensor führenden Druckleitung aufweist. Der Drucksensor weist eine Membran mit einem zentralen Dünnwandbereich auf, der mittels Dehnmessstreifen Druckänderungen in ein elektrisches Signal umwandelt. Zum Schutz der Sensormembran sowie einer Platine mit einer Verstärkerschaltung vor Staub und Feuchtigkeit ist an einem Flansch des Druckstutzens unter Zwischenlage einer Dichtung ein Schutzgehäuse befestigt.

Aufgabe der Erfindung ist es, einen Drucksensor mit einer Sensormembran im Frontbereich und einem druckseitig befestigten Thermoschutzelement derart zu verbessern, dass hohe Standzeiten in heißen Prozessgasen erzielbar sind, wobei das Thermoschutzelement auf einfache Weise zu montieren und demontieren sein soll. Weiters soll ein Demontagewerkzeug für die einfache und schonende Demontage des Thermoschutzelementes vom Drucksensor bereitgestellt werden.

Diese Aufgabe wird erfindungsgemäß dadurch gelöst, dass das Thermoschutzelement einen an der Innenfläche des zylindrischen Kragens des Drucksensors anliegenden Stützbereich aufweist, dem ein an der Außenfläche des zylindrischen Kragens angreifendes Klipssystem des Thermoschutzelementes gegenüber steht. Durch die Verlagerung des Klipssystems an die Außenseite des zylindrischen Kragens des Drucksensors, in den engen Ringspalt der Aufnahmebohrung für den Drucksensor, ist dieses weitgehend geschützt vor hoher Wärmebelastung und wenn der Außenradius des Membranschutzes nicht größer ist als der Außenradius des Sensors. Der Membranschutz weist eine Vielzahl von kleinen Durchgangsbohrungen auf, um einen ausreichenden Kontakt mit dem zu messenden Medium herzustellen und ist mit hakenförmigen Federelementen ausgestattet, die in eine innenliegende Nut im Endbereich des Sensors eingreifen. Im Messbetrieb kommt es durch die heißen Prozessgase - und bedingt durch den raschen Gaswechsel - zu einer hohen Erhitzung und Verschmutzung der innenliegenden Federelemente, wodurch diese beschädigt werden und brechen können.

Die Befestigung einer topfförmigen Schutzkappe am frontseitigen Ende eines Drucksensors mit Hilfe einer Spiralfeder, die in einer äußeren Ringnut des Sensors angeordnet ist, ist aus der US 5,948,983 A bekannt.

Aus der DE 10 2007 010 589 A1 ist ein Druckmessumformer bekannt, der aus einer Sensoraufnahme und einer Flanschaufnahme besteht, wobei letztere endseitig eine Trennmembran aufweist, die ein Druckübertragungsmittel in einem Kanal des Messumformers vom zu messenden Prozessmedium trennt. Als Transportschutz ist die Trennmembran durch eine an einem Außengewinde des Messumformers aufschraubbare Staubschutzkappe abgedeckt.

Aus der EP 1 619 488 A2 ist eine Druckmesseinrichtung bekannt, die einen Druckstutzen mit einer zu einem Drucksensor führenden Druckleitung aufweist. Der Drucksensor weist eine Membran mit einem zentralen Dünnwandbereich auf, der mittels Dehnmessstreifen Druckänderungen in ein elektrisches Signal umwandelt. Zum Schutz der Sensormembran sowie einer Platine mit einer Verstärkerschaltung vor Staub und Feuchtigkeit ist an einem Flansch des Druckstutzens unter Zwischenlage einer Dichtung ein Schutzgehäuse befestigt.

Aufgabe der Erfindung ist es, einen Drucksensor mit einer Sensormembran im Frontbereich und einem druckseitig befestigten Thermoschutzelement derart zu verbessern, dass hohe Standzeiten in heißen Prozessgasen erzielbar sind, wobei das Thermoschutzelement auf einfache Weise zu montieren und demontieren sein soll. Weiters soll ein Demontagewerkzeug für die einfache und schonende Demontage des Thermoschutzelementes vom Drucksensor bereitgestellt werden.

Diese Aufgabe wird erfindungsgemäß dadurch gelöst, dass das Thermoschutzelement einen an der Innenfläche des zylindrischen Kragens des Drucksensors anliegenden Stützbereich aufweist, dem ein an der Außenfläche des zylindrischen Kragens angreifendes Klipssystem des Thermoschutzelementes gegenüber steht. Durch die Verlagerung des Klipssystems an die Außenseite des zylindrischen Kragens des Drucksensors, in den engen Ringspalt der Aufnahmebohrung für den Drucksensor, ist dieses weitgehend geschützt vor hoher Wärmebelastung und Das erfindungsgemäße Sensorsystem mit einem Drucksensor samt Thermoschutzelement zeichnet sich dadurch aus, dass das Sensorsystem ein Demontagewerkzeug mit Abziehkrallen aufweist, die in zumindest eine an der Außenfläche des Thermoschutzelementes angeordnete Vertiefung, vorzugsweise in eine umlaufende Ringnut, eingreifen.

Gemäß einer bevorzugten Ausführungsvariante der Erfindung ist das Montagewerkzeug zweiteilig ausgeführt und weist ein auf den Drucksensor samt Thermoschutzelement aufklipsbares Abziehelement auf, dessen Abziehkrallen in die umlaufende Ringnut des Thermoschutzelementes eingreifen, sowie ein separates Adapterelement mit einer ersten Gewindeaufnahme, in die das Abziehelement samt Drucksensor und Thermoschutzelement zum Ablösen des Thermoschutzelementes vom Drucksensor einschraubbar ist. Damit ist eine einfache und schonende Demontage des Thermoschutzelementes vom Drucksensor gewährleistet.

Die Erfindung wird im Folgenden anhand von Zeichnungen näher erläutert. Es zeigen:
- Fig. 1: einen erfindungsgemäßen Drucksensor samt Thermoschutzelement in einer Schnittdarstellung;
- Fig. 2: der erfindungsgemäßen Drucksensor samt Thermoschutzelement gemäß Fig. 1 in einer Seitenansicht;
- Fig. 3: das Thermoschutzelement gemäß Fig. 1 in einer dreidimensionalen Darstellung; sowie die
- Fig. 4: bis Fig. 9 unterschiedliche Stadien beim Einsatz eines erfindungsgemäßen Demontagewerkzeuges zum Abziehen des Thermoschutzelementes vom Drucksensor.

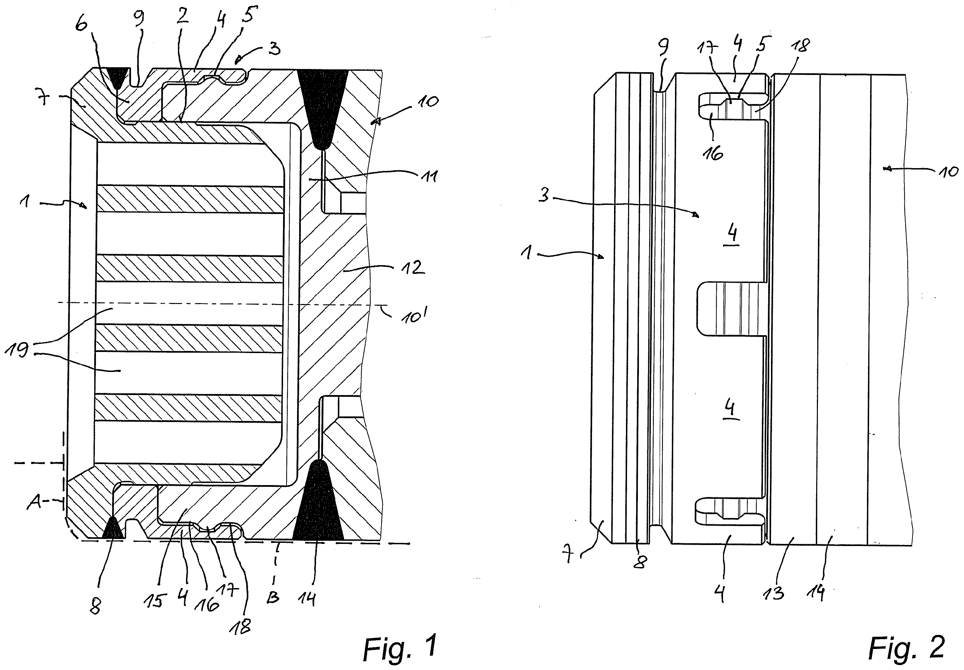

In der Schnittdarstellung gemäß Fig. 1 ist das Thermoschutzelement 1 am frontseitigen Ende eines Drucksensors 10 angeordnet, von welchem hier nur die Frontpartie dargestellt ist. Die Sensormembran 11 des Drucksensors 10 bildet im zentralen Bereich einen Membranstempel 12 aus, welcher auf ein hier nicht weiter dargestelltes Druckmesselement, beispielsweise ein piezoelektrisches Element, wirkt. Die Membran 11 ist mit dem Gehäuse des Drucksensors 10 verschweißt, wobei durch den Befestigungsflansch 13 der Sensormembran 11 ein das Thermoschutzelement 1 aufnehmender Membrantopf ausgebildet ist. Der zylindrische Kragen 15, an welchem das Thermoschutzelement 1 lösbar befestigt ist, ist als integraler Teil eines Befestigungsflansches 13 der Sensormembran 11 ausgebildet, wobei der Befestigungsflansch 13 frontseitig mit dem Drucksensor 10 (siehe Schweißnaht 14) verschweißt ist.

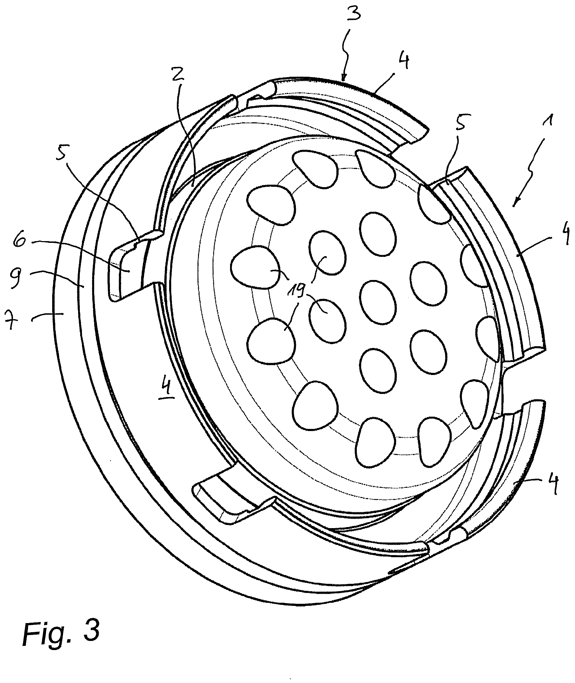

Das Thermoschutzelement 1 (siehe Fig. 1 bis Fig. 3) weist einen an der Innenfläche des zylindrischen Kragens 15 anliegenden Stützbereich 2, bzw. eine zylindrische Stützfläche auf, dem bzw. der ein an der Außenfläche des zylindrischen Kragens 15 angreifendes, außerhalb des Wirkungsbereiches der heißen Prozessgase liegendes Klipssystem 3 des Thermoschutzelementes 1 gegenüber steht.

Das Klipssystem 3 weist mehrere am äußeren Umfang des Thermoschutzelementes 1 angeordnete kreisbogenförmige Halteabschnitte 4 auf, deren Rastelemente in gegensinnige Rastelemente an der Außenfläche des zylindrischen Kragens 15 eingreifen, wobei die Halteabschnitte 4 den frontseitigen Außendurchmesser des Drucksensors 10 nicht überragen.

In Fig. 1 ist strichliert ein frontdichtender Einbau des Drucksensors 10 in eine Messbohrung B angedeutet, wobei der Außenflansch 7 des Thermoschutzelementes 1 an einem Absatz A der Messbohrung B dichtend anliegt.

An der Außenfläche des zylindrischen Kragens 15 sind im Anschluss an eine zylindrische Aufnahmefläche 16, zum Ansetzen des Thermoschutzelementes 1, ein Ringwulst 17 und eine Ringnut 18 angeordnet, wobei der Ringwulst 17 in eine Ringnut bzw. Ringnutabschnitte 5 der federnd ausgebildeten Halteabschnitte 4 einrastet.

Bei der Erfindung ist somit das Thermoschutzelement 1 um die Sensorachse 10' frei drehbar in der Ringnut 18 an der Außenfläche des zylindrischen Kragens 15 befestigt, sodass sich das Thermoschutzelement 1 beim Herausdrehen des Drucksensors 10 aus einer Messbohrung B nicht mitdreht.

Die Halteabschnitte 4 des Klipssystems 3 gehen von einem Basisring 6 aus, der vom Außenflansch 7 des Thermoschutzelementes 1 druckseitig abgeschirmt und mit diesem verschweißt ist. Das Klipssystem 3, bestehend aus dem Basisring 6 und den Halteabschnitten 4, kann somit als separater Bauteil, beispielsweise aus einer Federstahllegierung, gefertigt und mit dem Außenflansch 7 an der Außenseite des Thermoschutzelementes 1 verschweißt werden.

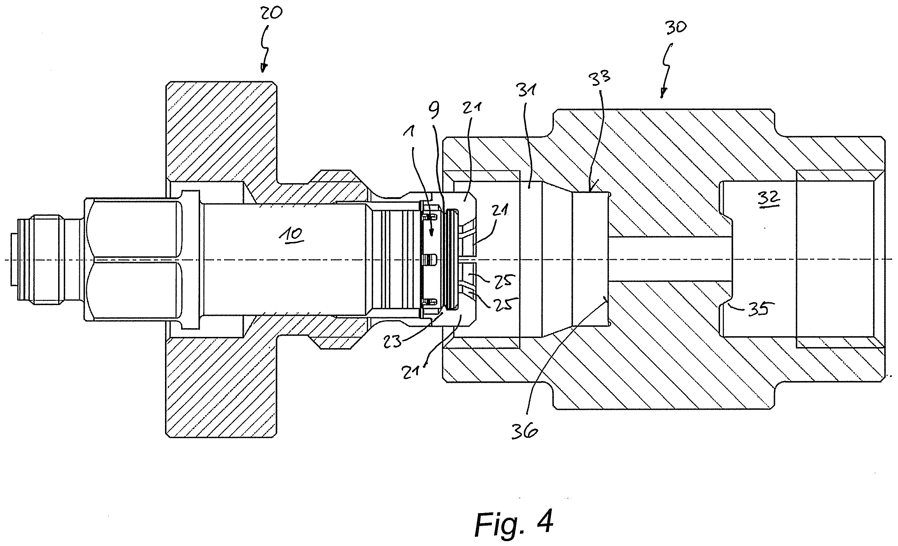

An der zylindrischen Außenfläche des Thermoschutzelementes 1 ist zumindest eine Vertiefung, vorzugsweise eine umlaufende Ringnut 9, für den Eingriff eines Demontagewerkzeugs 20, 30 ausgebildet, dessen Anwendung in den Fig. 4 bis Fig. 9 näher beschrieben wird.

Das Thermoschutzelement 1 weist im sensitiven Bereich der Sensormembran 11 über die Membranfläche verteilt angeordnete Durchgangsbohrungen 19 auf, die für einen raschen Gaswechsel vom Messraum in den Freiraum zwischen Thermoschutzelement 1 und Sensormembran 11 sorgen. Das Thermoschutzelement 1 kann im sensitiven Bereich der Sensormembran 11 auch parallel verlaufende oder als Kreisbogensegmente ausgebildete Lamellen aufweisen (siehe EP 2 440 900 B1)

Das erfindungsgemäße Sensorsystem, bestehend aus dem Drucksensor 10 und dem Thermoschutzelement 1, weist ein Demontagewerkzeug zum Abziehen des Thermoschutzelementes 1 auf, welches gemäß Fig. 4 aus zwei separaten Teilen besteht, nämlich aus einem auf den Drucksensor 10 samt Thermoschutzelement 1 aufklipsbaren Abziehelement 20, dessen Abziehkrallen 21 mit einer Nase 23 in die umlaufende Ringnut 9 des Thermoschutzelementes 1 eingreifen, sowie aus einem Adapterelement 30 mit einer ersten Gewindeaufnahme 31, in die das Abziehelement 20 samt Drucksensor 10 und Thermoschutzelement 1 zum Ablösen des Thermoschutzelementes 1 vom Drucksensor 10 einschraubbar ist.

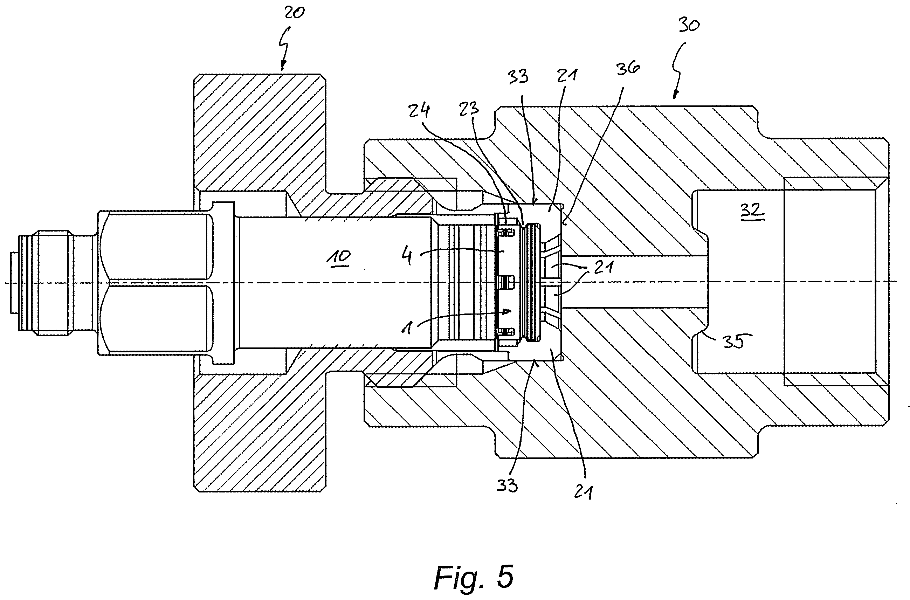

Erfindungsgemäß ist in der ersten Gewindeaufnahme 31 des Adapterelementes 30 im Bereich einer Schulter 36 der Gewindeaufnahme 31 eine zylindrische Passfläche 33 ausgebildet, an welcher die Abziehkrallen 21 nach dem Einschrauben des Abziehelementes 20 anliegen (siehe Fig. 5), wodurch ein Ausfedern der Abziehkrallen 21 aus der Ringnut 9 des Thermoschutzelementes 1 verhindert wird.

Zum schonenden Abziehen des Thermoschutzelementes 1 vom Drucksensor 10 werden beide zusammen in die Gewindebohrung 22 des Abziehelementes 20 eingeschraubt (siehe linke Seite Fig. 4), wobei die Abziehkrallen 21 mit deren Nasen 23 in die Ringnut 9 des Thermoschutzelementes 1 einrasten. Danach wird das Abziehelement 20 in die erste Gewindeaufnahme 31 des Adapterelementes 30 eingeschraubt, bis die Abziehkrallen 21 an der Schulter 36 anstoßen und gleichzeitig radial an der zylindrischen Passfläche 33 anliegen (siehe Fig. 5).

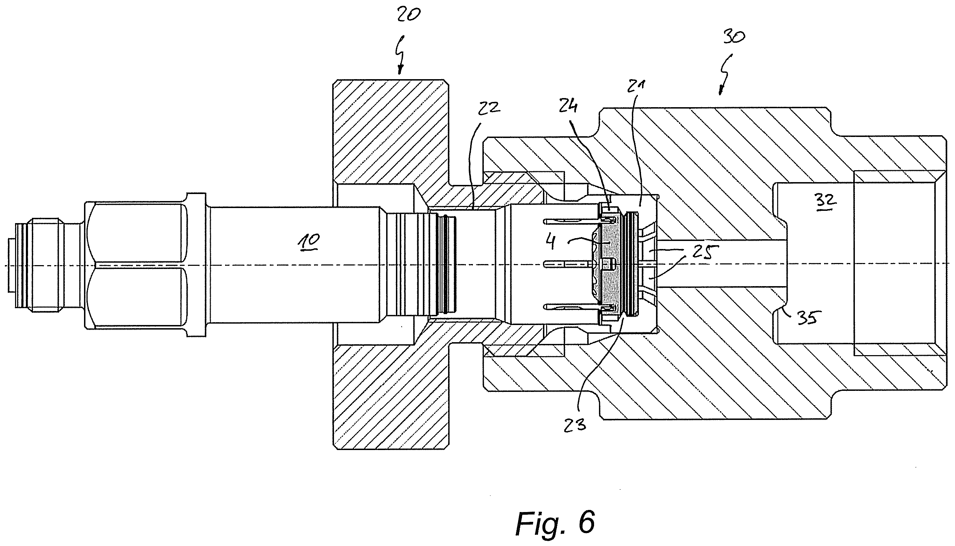

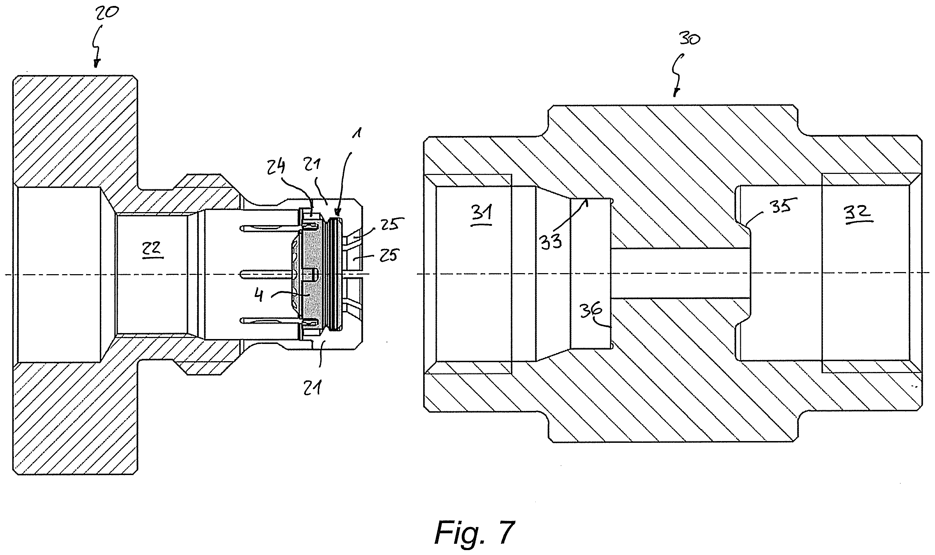

Nun kann der Drucksensor 10 aus dem Abziehelement 20 herausgeschraubt werden (siehe Fig. 6), wobei das Thermoschutzelement 1 nach wie vor durch die blockierten Abziehkrallen 21 festgehalten wird und die Halteabschnitte 4 des Klipssystems 3 in eine ringförmige Freistellung 24 der Abziehkrallen 21 ausfedern können. Dadurch wird das Thermoschutzelement 1 vom Drucksensor 10 abgezogen und kann mit dem Abziehelement 20 aus dem Adapterelement 30 herausgeschraubt werden (siehe Fig. 7).

Erfindungsgemäß ist das Adapterelement 30 mit einer zweiten Gewindeaufnahme 32 ausgestattet, in die das Abziehelement 20 mit dem Thermoschutzelement 1 zum Auswerfen des Thermoschutzelementes 1 einschraubbar ist. Dazu weist die zweite Gewindeaufnahme 32 eine zylindrische Freistellung 34 im Bereich der Abziehkrallen 21 des Abziehelementes 20 sowie einen konischen Anschlag 35 zum Öffnen der Abziehkrallen 21 auf.

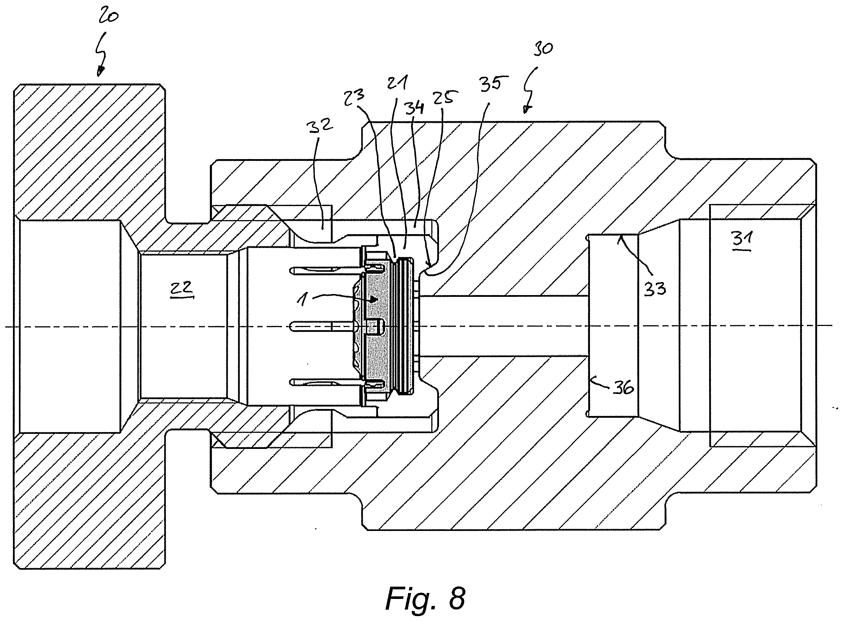

Wie in Fig. 8 dargestellt, kommt nun die zweite Gewindeaufnahme 32 des Adapterelementes 30 zum Einsatz, in die das Adapterelement 20 samt Thermoschutzelement 1 eingeschraubt wird. Die an den Abziehkrallen 21 ausgebildeten Führungsflächen 25 kommen nun zur Anlage am konischen Anschlag 35, wodurch die Abziehkrallen 21 radial nach außen in die zylindrische Freistellung 34 bewegt werden und das Thermoschutzelement 1 frei geben.

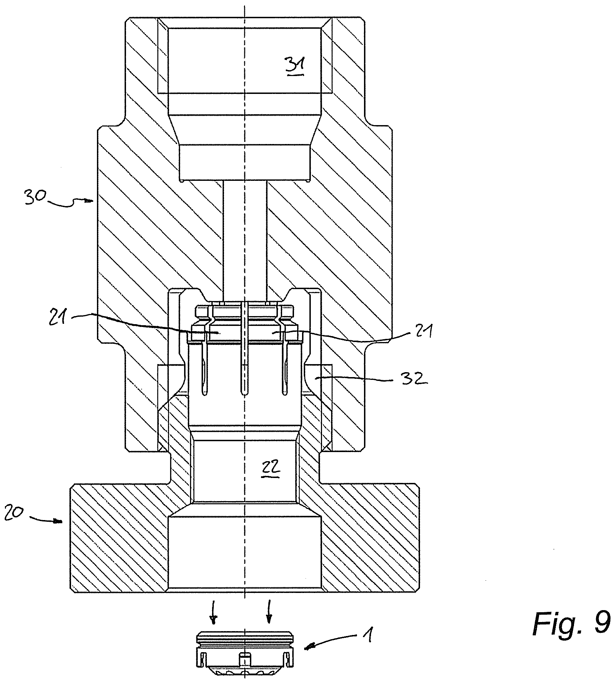

Das Thermoschutzelement 1 fällt nun bei nach unten gerichteter Gewindebohrung 22 des Abziehelementes 20 aus dem Abziehelement - eventuell unterstützt durch leichte Schüttelbewegungen - heraus (siehe Fig. 9).

## Patentansprüche

1. Drucksensor (10) mit einer Sensormembran (11) im Frontbereich, wobei der Sensor druckseitig einen zylindrischen Kragen (15) aufweist, an welchem ein Thermoschutzelement (1) lösbar befestigt ist, **dadurch gekennzeichnet, dass** das Thermoschutzelement (1) einen an der Innenfläche des zylindrischen Kragens (15) anliegenden Stützbereich (2) aufweist, dem ein an der Außenfläche des zylindrischen Kragens (15) angreifendes Klipssystem (3) des Thermoschutzelementes (1) gegenüber steht.

2. Drucksensor (10) nach Anspruch 1, **dadurch gekennzeichnet, dass** das Klipssystem (3) mehrere am äußeren Umfang des Thermoschutzelementes (1) angeordnete Halteabschnitte (4) aufweist, deren Rastelemente in gegensinnige Rastelemente an der Außenfläche des zylindrischen Kragens (15) eingreifen, wobei die Halteabschnitte (4) den frontseitigen Außendurchmesser des Drucksensors (10) nicht überragen.

3. Drucksensor (10) nach Anspruch 1 oder 2, **dadurch gekennzeichnet, dass** das Thermoschutzelement (1) um eine Sensorachse (10') frei drehbar an der Außenfläche des zylindrischen Kragens (15) befestigt ist.

4. Drucksensor (10) nach Anspruch 2 oder 3, **dadurch gekennzeichnet, dass** an der Außenfläche des zylindrischen Kragens (15) im Anschluss an eine zylindrische Aufnahmefläche (16), zum Ansetzen des Thermoschutzelementes (1), ein Ringwulst (17) und eine Ringnut (18) angeordnet sind, wobei der Ringwulst (17) in eine Ringnut (5) der Halteabschnitte (4) einrastet.

5. Drucksensor (10) nach einem der Ansprüche 1 bis 4, **dadurch gekennzeichnet, dass** die Halteabschnitte (4) des Klipssystems (3) von einem Basisring (6) ausgehen, der von einem Außenflansch (7) des Thermoschutzelementes (1) druckseitig abgeschirmt und mit diesem verschweißt ist.

6. Drucksensor (10) nach Anspruch 5, **dadurch gekennzeichnet, dass** der Außenflansch (7) des Thermoschutzelementes (1) bei einem bevorzugt frontdichtenden Einbau des Drucksensors (10) in eine Messbohrung an einem Absatz der Messbohrung dichtend anliegt.

7. Drucksensor (10) nach einem der Ansprüche 1 bis 6, **dadurch gekennzeichnet, dass** der zylindrische Kragen (15) als integraler Teil eines Befestigungsflansches (13) der Sensormembran (11) ausgebildet ist, welcher frontseitig mit dem Drucksensor (10) verschweißt ist.

8. Drucksensor (10) nach einem der Ansprüche 1 bis 7, **dadurch gekennzeichnet, dass** an der zylindrischen Außenfläche des Thermoschutzelementes (1) zumindest eine Vertiefung, vorzugsweise eine umlaufende Ringnut (9), für den Eingriff eines Demontagewerkzeugs (20, 30) ausgebildet ist.

9. Drucksensor (10) nach einem der Ansprüche 1 bis 8, **dadurch gekennzeichnet, dass** das Thermoschutzelement (1) im sensitiven Bereich der Sensormembran (11) Durchgangsbohrungen (19) aufweist.

10. Drucksensor (10) nach einem der Ansprüche 1 bis 8, **dadurch gekennzeichnet, dass** das Thermoschutzelement (1) im sensitiven Bereich der Sensormembran (11) parallel verlaufende oder als Kreisbogensegmente ausgebildete Lamellen aufweist.

11. Sensorsystem mit einem Drucksensor (10) samt Thermoschutzelement (1) nach einem der Ansprüche 1 bis 10, **dadurch gekennzeichnet, dass** das Sensorsystem ein Demontagewerkzeug (20, 30) mit Abziehkrallen (21) aufweist, die in zumindest eine an der Außenfläche des Thermoschutzelementes (1) angeordnete Vertiefung, vorzugsweise in eine umlaufende Ringnut (9), eingreifen.

12. Sensorsystem nach Anspruch 11, **dadurch gekennzeichnet, dass** das bevorzugt zweiteilige Montagewerkzeug ein auf den Drucksensor (10) samt Thermoschutzelement (1) aufklipsbares Abziehelement (20) aufweist, dessen Abziehkrallen (21) in die umlaufende Ringnut (9) des Thermoschutzelementes (1) eingreifen, sowie ein Adapterelement (30) mit einer ersten Gewindeaufnahme (31), in die das Abziehelement (20) samt Drucksensor (10) und Thermoschutzelement (1) zum Ablösen des Thermoschutzelementes (1) vom Drucksensor (10) einschraubbar ist.

13. Sensorsystem nach Anspruch 12, **dadurch gekennzeichnet, dass** in der ersten Gewindeaufnahme (31) des Adapterelementes (30) eine zylindrische Passfläche (33) ausgebildet ist, welche ein Ausfedern der Abziehkrallen (21) aus der Ringnut (9) des Thermoschutzelementes (1) verhindert.

14. Sensorsystem nach Anspruch 12 oder 13, **dadurch gekennzeichnet, dass** das Adapterelement (30) eine zweite Gewindeaufnahme (32) aufweist, in die das Abziehelement (20) mit dem Thermoschutzelement (1) zum Auswerfen des Thermoschutzelementes (1) einschraubbar ist.

15. Sensorsystem nach Anspruch 14, **dadurch gekennzeichnet, dass** die zweite Gewindeaufnahme (32) des Adapterelementes (30) eine zylindrische Freistellung (34) im Bereich der Abziehkrallen (21) des Abziehelementes (20) sowie einen konischen Anschlag (35) zum Öffnen der Abziehkrallen (21) aufweist.

## Claims

1. A pressure sensor (10), comprising a sensor diaphragm (11) in the front region, wherein the sensor comprises a cylindrical collar (15) on the pressure side, on which a thermal protection element (1) is detachably fastened, **characterised in that** the thermal protection element (1) comprises a support region (2) which abuts the inner surface of the cylindrical collar (15), which support region is opposed by a clip system (3) of the thermal protection element (1) which acts on the outer surface of the cylindrical collar (15).

2. A pressure sensor (10) according to claim 1, **characterised in that** the clip system (3) has a plurality of retaining sections (4) arranged on the outer circumference of the thermal protection element (1), the detent elements of which engage with opposing detent elements on the outer surface of the cylindrical collar (15), wherein the retaining sections (4) do not protrude beyond the front-side outer diameter of the pressure sensor (10).

3. A pressure sensor (10) according to claim 1 or 2, **characterised in that** the thermal proteciton element (1) is fastened in a freely rotatable manner about a sensor axis (10') to the outer surface of the cylindrical collar (15).

4. A pressure sensor (10) according to claim 2 or 3, **characterised in that** an annular bead (17) and an annular groove (17) are arranged on the outer surface of the cylindrical collar (15), adjoining a cylindrical receiving surface (16), for applying the thermal protection element (18), wherein the annular bead (17) engages in an annular groove (5) of the retaining sections (4).

5. A pressure sensor (10) according to one of claims 1 to 4, **characterised in that** the retaining sections (4) of the clip system (3) extend from a base ring (6), which is shielded on the pressure side by an outer flange (7) of the thermal protection element (1) and is welded thereto.

6. A pressure sensor (10) according to claim 5, **characterised in that** the outer flange (7) of the thermal protection element (1) lies sealingly against a shoulder of the measuring bore when the pressure sensor (10) is mounted in a measuring bore in a manner preferably sealed at the front.

7. A pressure sensor (10) according to one of claims 1 to 6, **characterised in that** the cylindrical collar (15) is formed as an integral part of a fastening flange (13) of the sensor diaphragm (11), which is welded on the front side to the pressure sensor (10).

8. A pressure sensor (10) according to one of claims 1 to 7, **characterised in that** at least one recess, preferably a circumferential annular groove (9), is formed on the cylindrical outer surface of the thermal protection element (1) for the engagement of a disassembly tool (20, 30).

9. A pressure sensor (10) according to one of claims 1 to 8, **characterised in that** the thermal protection element (1) has through-holes (19) in the sensitive region of the sensor diaphragm (11).

10. A pressure sensor (10) according to one of claims 1 to 8, **characterised in that** the thermal protection element (1) has lamellae running parallel or formed as circular arc segments in the sensitive area of the sensor diaphragm (11).

11. A sensor system, comprising a pressure sensor (10) together with a thermal protection element (1) according to one of claims 1 to 10, **characterised in that** the sensor system has a disassembly tool (20, 30) with extractor claws (21) which engage in at least one recess, preferably a peripheral annular groove (9), which is arranged on the outer surface of the thermal protection element (1).

12. A sensor system according to claim 11, **characterised in that** the preferably two-part mounting tool has a pull-off element (20) which can be clipped onto the pressure sensor (10) together with the thermal protection element (1), the extractor claws (21) of which are inserted into the circumferential annular groove (9) of the thermal protection element (1), as well as an adapter element (30) with a first threaded receptacle (31), into which the pull-off element (20) together with pressure sensor (10) and thermal protection element (1) can be screwed for detaching the thermal protection element (1) from the pressure sensor (10).

13. A sensor system according to claim 12, **characterised in that** a cylindrical mating surface (33) is formed in the first threaded receptacle (31) of the adapter element (30), which prevents a rebounding of the extractor claws (21) out of the annular groove (9) of the thermal protection element (1).

14. A sensor system according to claim 12 or 13, **characterised in that** the adapter element (30) has a second threaded receptacle (32), into which the pull-off element (20) can be screwed with the thermal protection element (1) for ejecting the thermal protection element (1).

15. A sensor system according to claim 14, **characterised in that** the second threaded receptacle (32) of the adapter element (30) has a cylindrical recess (34) in the region of the extractor claws (21) of the pull-off element (20), as well as a conical stop (35) for opening the extractor claws (21).

## Revendications

1. Capteur de pression (10) équipé d'une membrane de détection (11) ce capteur comprenant dans sa zone frontale, côté pression, une collerette cylindrique (15) sur laquelle est fixé de manière amovible un élément de protection thermique (1),
**caractérisé en ce que**
l'élément de protection thermique (1) comporte une zone d'appui (2) s'appliquant sur la surface interne de la collerette cylindrique (15) à l'opposé de laquelle est installé un système de clipsage (3) de l'élément de protection thermique (1) venant en prise avec la surface externe de la collerette cylindrique (15).

2. Capteur de pression (10), conforme à la revendication 1,
**caractérisé en ce que**
le système de clipsage (3) comporte plusieurs segments de retenue (4) situés à la périphérie externe de l'élément de protection thermique (1), et dont les éléments d'encliquetage viennent en prise avec des éléments d'encliquetage antagonistes situés sur la surface externe de la collerette cylindrique (15), les segments de retenue (4) ne dépassant pas du diamètre externe coté frontal du capteur de pression (10).

3. Capteur de pression (10), conforme à la revendication 1 ou 2,
**caractérisé en ce que**
l'élément de protection thermique (1) est fixé sur la surface externe de la collerette cylindrique (15) en étant librement mobile en rotation autour de l'axe (10') du capteur.

4. Capteur de pression (10), conforme à la revendication 2 ou 3,
**caractérisé en ce que**
la surface externe de la collerette cylindrique (15) comporte dans le prolongement d'une surface de réception cylindrique (16) un bourrelet annulaire (17) et une rainure annulaire (18) pour permettre la fixation de l'élément de protection thermique (1), le bourrelet annulaire (17) s'encliquetant dans une rainure annulaire (5) du segment de retenue (4).

5. Capteur de pression (10) conforme à l'une des revendications 1 à 4,
**caractérisé en ce que**
les segments de retenue (4) du système de clipsage (3) partent d'une bague de base (6) qui est protégée côté pression par une bride externe (7) de l'élément de protection thermique (1) et est soudée à celle-ci.

6. Capteur de pression (10), conforme à la revendication 5,
**caractérisé en ce que**
la bride externe (7) de l'élément de protection thermique (1) s'applique hermétiquement, lors d'un montage de préférence étanche côté frontal du capteur de pression (10) dans un perçage de mesure contre un talon de ce perçage de mesure.

7. Capteur de pression (10), conforme à l'une des revendications 1 à 6,
**caractérisé en ce que**
la collerette cylindrique (15) est réalisée sous la forme d'une partie intégrée d'une bride de fixation (13) de la membrane de détection (11) qui est soudée côté frontal sur le capteur de pression (10).

8. Capteur de pression (10), conforme à l'une des revendications 1 à 7,
**caractérisé en ce que**
sur la surface externe cylindrique de l'élément de protection thermique (1) est formée au moins une cavité, de préférence une rainure annulaire périphérique (9) pour permettre la mise en prise d'un outil de démontage (20, 30).

9. Capteur de pression (10), conforme à l'une des revendications 1 à 8,
**caractérisé en ce que**
l'élément de protection thermique (1) comporte des perçages traversants (19) dans la zone sensible de la membrane de détection (11).

10. Capteur de pression (10), conforme à l'une des revendications 1 à 8,
**caractérisé en ce que**
l'élément de protection thermique (1) comporte, dans la zone sensible de la membrane de détection (11) des lamelles s'étendant parallèlement ou réalisées sous la forme de segments d'arcs de cercle.

11. Système de capteur comprenant un élément de capteur (10) équipé d'un élément de protection thermique (1) conforme à l'une des revendications 1 à 10,
**caractérisé en ce que**
le système de capteur comporte un outil de démontage (20, 30) ayant des griffes d'extraction (21) qui viennent en prise dans au moins une cavité située sur la surface externe de l'élément de protection thermique (1), et de préférence dans une rainure annulaire périphérique (9).

12. Système de capteur conforme à la revendication 11,
**caractérisé en ce que**
l'outil de démontage qui est de préférence en deux parties comporte un élément d'extraction (20) pouvant être clipsé sur le capteur de pression (10) équipé de l'élément de protection thermique (1), dont les grilles d'extraction (21) viennent en prise dans la rainure annulaire périphérique (9) de l'élément de protection thermique (1), ainsi qu'un élément adaptateur (30) ayant un premier logement fileté (31) dans lequel peut être vissé l'élément d'extraction (20) équipé du capteur de pression (10) et de l'élément de protection thermique (1) pour séparer l'élément de protection thermique (1) du capteur de pression (10).

13. Système de capteur conforme à la revendication 12,
**caractérisé en ce que**
dans le premier logement fileté (31) de l'élément adaptateur (30) est formée une surface d'adaptation cylindrique (33) qui empêche une extraction élastique des griffes d'extraction (21) de la rainure annulaire (9) de l'élément de protection thermique (1).

14. Système de capteur conforme à la revendication 12 ou 13,
**caractérisé en ce que**
l'élément adaptateur (30) comporte un second logement fileté (32) dans lequel peut être vissé l'élément d'extraction (20) équipé de l'élément de protection thermique (1) pour permettre l'éjection de l'élément de protection thermique (1).

15. Système de capteur conforme à la revendication 14,
**caractérisé en ce que**
le second logement fileté (32) de l'élément adaptateur (30) comporte un vide cylindrique (34) dans la zone des griffes d'extraction (21) de l'élément d'extraction (20) ainsi qu'une butée conique (35) pour permettre d'ouvrir les griffes d'extraction (21).
